# DEMANDE DE BREVET EUROPEEN

(11) **EP 3 026 563 A1**
(43) Date de publication de la demande: **01.06.2016**
(21) Numéro de dépôt: 15194376.8
(22) Date de dépôt: 12.11.2015
(51) Int. Cl.: G06F 11/34

(54) **METHODES ET SYSTEMES DE GENERATION DE SCENARIOS DE TESTS DE PERFORMANCES D'UNE APPLICATION SERVEUR**

(30) Priorité: 25.11.2014 FR 1461456
(71) Demandeur: Bull S.A.S., 78340 Les Clayes-sous-Bois (FR)
(72) Inventeur: DEMEILLIEZ, Bruno, 38330 MONTBONNOT SAINT MARTIN (FR); GERMAIN, Christophe, 38100 GRENOBLE (FR); ROBINE, Christophe, 38130 ECHIROLLES (FR)
(74) Mandataire: Demulsant, Xavier

(57) **Abrégé**

Procédé pour la génération d'un scénario de test de performances d'une application serveur, ce procédé comprenant les étapes suivantes
- interception d'une requête adressée à l'application serveur ;
- enregistrement, dans une trace de requêtes, d'au moins un paramètre prédéfini de la requête interceptée;
- distinction, dans la trace de requêtes, d'une suite prédéfinie de paramètres, ces paramètres étant, respectivement, d'une suite de requêtes interceptées successivement, la suite de requêtes représentant un acte métier supporté par l'application serveur de sorte que la distinction, dans la trace de requêtes, de la suite prédéfinie de paramètres correspond à la distinction, dans la trace de requêtes, d'un acte métier;
- génération d'un scénario de test de performance de l'application serveur incluant l'acte métier distingué dans la trace de requêtes.

## Description

La présente invention se rapport généralement au domaine technique des tests de performances des applications serveur, et plus particulièrement à la détection automatique des actes métier et de leurs différentes caractéristiques permettant d'élaborer des scénarios de test de performances de ces applications serveur en production.

On entend, ici, par application serveur toute application informatique composée d'une pluralité de pages (ou écrans) et des liens entre ces pages permettant à ses utilisateurs d'accomplir des taches spécifiques. Une application serveur en production est une application déployée sur un ou plusieurs serveur(s) d'application de sorte que son contenu soit accessible, via un réseau, aux utilisateurs disposant d'une application cliente prédéfinie. A titre d'exemple, l'application serveur est une application Web déployée sur un serveur Web accessible via un navigateur Web.

Par ailleurs, un « acte métier » désigne, ici, une activité comprenant une ou plusieurs interaction(s) ou transaction(s) de type requête/réponse ayant lieu entre un utilisateur et une application serveur pour répondre à un besoin métier fourni par cette application. A titre d'exemples non-limitatifs d'actes métier, on cite l'acte métier d'un achat en ligne, l'acte métier de remplissement et la soumission d'un formulaire électronique, l'acte métier d'authentification, l'acte métier de téléchargement et/ou de chargement d'un contenu, ou l'acte métier de demande d'accès à un certain contenu tel qu'une page Web.

Avant sa mise en ligne et pour vérifier son bon fonctionnement une fois en production, des tests de performances sont appliqués à l'application serveur. Pour cela, des scénarios utilisateur comprenant une suite d'écrans représentant un ou plusieurs actes métier sont définis, ensuite simulés sur cette application serveur.

Afin de réduire les coûts de ces tests de performances, généralement seuls les scénarios qui semblent être représentatifs de l'activité des utilisateurs et avoir un réel impact sur les ressources de la chaine applicative sont retenus. Il faut, ensuite, fixer les paramètres des actes métier dans chacun des scénarios retenus, tels que les actes métier à simuler, la volumétrie et la durée totale de chaque acte métier, avant de lancer la simulation.

En effet, même si l'application serveur est déjà en production dans une version précédente, on ne dispose pas d'informations suffisantes permettant d'avoir connaissance du comportement réel des utilisateurs permettant de baser les simulations sur des mesures factuelles.

On est, donc, contraint de faire des hypothèses en discutant avec les utilisateurs finaux, les développeurs et/ou les experts pour essayer de modéliser la simulation qui sera jouée dans les tests de performances. Cela revient souvent à des extrapolations plus ou moins réalistes qui peuvent parfois conduire à une forte dégradation de la qualité de service lors de la mise en production, notamment lorsque la simulation est très éloignée de la réalité.

Dans ce contexte, il existe des solutions permettant d'avoir des statistiques de fréquentation d'application serveur ou des solutions permettant de connaître le comportement des utilisateurs, mais aucune de ces solutions ne permet de déterminer les actes métier et leurs paramètres (acte métier, volumétrie, durée par exemple) permettant de faire une simulation réaliste et fidèle à ce qui se passe en production.

Par ailleurs, à ce jour, aucune solution ne permet de fournir de façon automatique l'ensemble des informations nécessaires à la définition de scénarios de tests de performances d'une application serveur.

Un objet de la présente invention est de remédier aux inconvénients précités.

Un autre objet de la présente invention est de déterminer de façon automatique les actes métier effectués par les utilisateurs ainsi que l'ensemble des paramètres caractéristiques de ces actes métier (type d'acte métier, volumétrie, durée, temps de traitements de l'acte métier par exemple).

A cette fin, l'invention se rapporte, selon un premier aspect, à un procédé pour la génération d'un scénario de test de performances d'une application serveur, ce procédé comprenant les étapes suivantes
- interception d'une requête adressée à l'application serveur ;
- enregistrement, dans une trace de requêtes, d'au moins un paramètre prédéfini de la requête interceptée;
- distinction, dans la trace de requêtes, d'une suite prédéfinie de paramètres, ces paramètres étant, respectivement, d'une suite de requêtes interceptées successivement, la suite de requêtes représentant un acte métier supporté par l'application serveur de sorte que la distinction, dans la trace de requêtes, de la suite prédéfinie de paramètres correspond à la distinction, dans la trace de requêtes, d'un acte métier;
- génération d'un scénario de test de performances de l'application serveur incluant l'acte métier distingué dans la trace de requêtes.

Ce procédé comprend, selon diverses réalisations, les étapes suivantes, le cas échéant combinées :
- une étape de marquage de la requête interceptée par un identifiant associé à la source de cette requête ;
- une étape d'enregistrement de l'identifiant par lequel est marqué la requête interceptée avec ledit au moins un paramètre prédéfini;
- une étape de test de correspondance de la requête interceptée à un modèle prédéfini de requêtes ou à une liste finie de requêtes prédéfinies, ledit au moins un paramètre prédéfini enregistré étant d'une requête interceptée vérifiant le test de correspondance ;
- une étape de filtrage en fonction de la source de la requête interceptée, ledit au moins un paramètre prédéfini enregistré étant d'une requête intercepté provenant d'une source prédéfinie.

L'invention se rapporte, selon un deuxième aspect, à un dispositif pour la génération d'un scénario de test de performances d'une application serveur, ce dispositif comprenant
- un sondeur d'actes métier configuré pour
   o intercepter une requête adressée à l'application serveur ;
   o enregistrer, dans une trace de requêtes, au moins un paramètre prédéfini de la requête interceptée;
- un générateur de scénario de test de performances configuré pour
   o distinguer, dans la trace de requêtes, d'une suite prédéfinie de paramètres, ces paramètres étant, respectivement, d'une suite de requêtes interceptées successivement, la suite de requêtes représentant un acte métier supporté par l'application serveur de sorte que la distinction, dans la trace de requêtes, de la suite prédéfinie de paramètres correspond à la distinction, dans la trace de requêtes, d'un acte métier;
   o générer un scénario de test de performances de l'application serveur incluant un acte métier distingué dans la trace de requêtes.

Le sondeur d'actes métier est, en outre, configuré
- pour marquer l'entête de la requête interceptée par un identifiant associé à la source de cette requête interceptée ;
- pour tester la correspondance de la requête interceptée à un modèle prédéfini de requêtes ou à une liste finie de requêtes prédéfinies, ledit au moins un paramètre prédéfini enregistré étant d'une requête interceptée vérifiant le test de correspondance; et
- pour filtrer en fonction de la source de la requête interceptée, ledit au moins un paramètre prédéfini enregistré étant d'une requête intercepté provenant d'une source prédéfinie.

L'invention se rapporte, selon un troisième aspect, à un produit programme d'ordinateur implémenté sur un support mémoire, susceptible d'être mis en oeuvre au sein d'une unité de traitement informatique et comprenant des instructions pour la mise en oeuvre du procédé résumé ci-dessus.

D'autres caractéristiques et avantages de l'invention apparaîtront plus clairement et de manière concrète à la lecture de la description ci-après de modes de réalisation préférés, faite ci-après en référence aux dessins annexés dans lesquels :
- la figure 1 illustre schématiquement une représentation fonctionnelle non limitative d'un mode de réalisation pour la détection automatique d'actes métier et la génération d'un scénario de test de performances d'une application serveur;
- la figure 2 illustre schématiquement des étapes d'un procédé pour la détection automatique d'actes métier réalisés sur une application serveur ; et
- la figure 3 illustre schématiquement des étapes d'un procédé pour la génération, selon un mode de réalisation, d'un scénario de test de performances d'une application serveur.

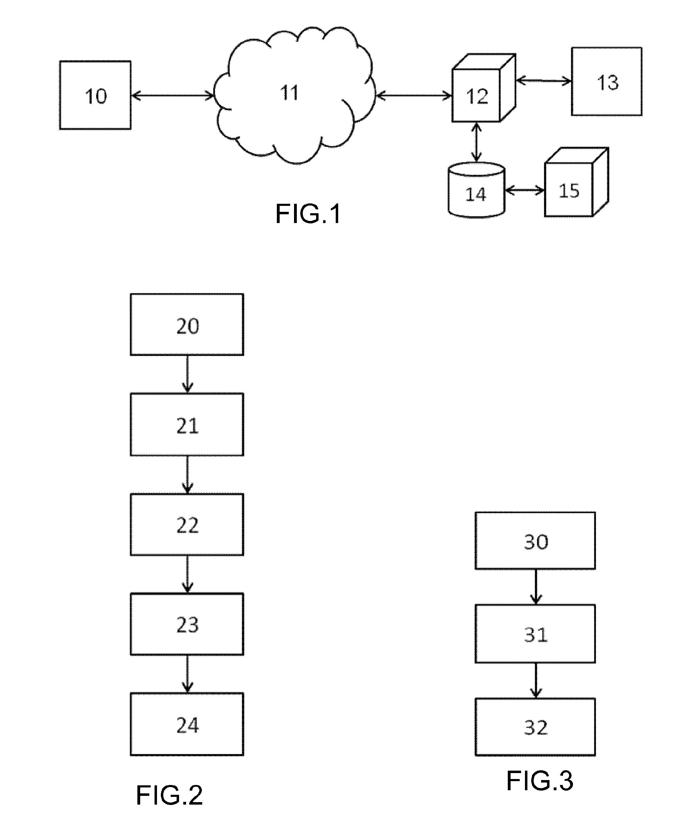

Sur la figure 1 est affiché un terminal utilisateur **10** via lequel, un utilisateur peut adresser, par l'intermédiaire d'un réseau de communication **11,** une requête à une plateforme informatique **13.** La plateforme informatique **13** héberge une application serveur (telle qu'une application Web). Le terminal utilisateur **10** est, en outre, configuré pour recevoir, depuis la plateforme informatique **13,** une réponse à sa requête. Ces requêtes/réponses sont dans le cadre d'actes métier initiés par l'utilisateur afin de bénéficier d'un service applicatif fourni par l'application serveur qui est déployée sur la plateforme informatique **13.** Ce service applicatif est un service Web mis à disposition par la plateforme informatique **13** sur demande depuis le terminal utilisateur **10.** Le service Web proposé peut comprendre, par exemples, un service de courriel, un service d'agenda, la navigation dans un système d'information, un service d'interrogation de bases de données en ligne, un service d'enseignement à distance, un service de vente et/ou de réservation en ligne, un service de remplissage et de soumission d'un formulaire électronique, un service de streaming, un service de téléchargement et/ou de chargement de contenus.

La plateforme informatique **13** peut comprendre un ou plusieurs modules applicatifs interconnectés tel qu'une pluralité de serveurs Web et/ou de bases de données.

Le terminal utilisateur **10** est un ordinateur, une tablette numérique, un Smartphone, un téléphone portable, ou plus généralement tout dispositif permettant à un utilisateur d'émettre des requêtes, via un réseau informatique **11** (par exemple LAN, WLAN, ou PAN, journal d'une base de données, courriel), vers un serveur Web distant. A cet égard, le terminal utilisateur **10** est pourvu d'une application cliente permettant d'envoyer des requêtes (c.à.d. des demandes de service) à la plateforme informatique **13** et d'en interpréter les réponses. Cette application cliente est, par exemple, un navigateur Web (FireFox ®, Fennec ®, Opéra ®, Opéra Mobile ®, Internet Explorer®, Google Chrome® par exemple), ou un navigateur ftp (tel que FileZilla®).

Un sondeur **12** d'actes métier intercepte les requêtes adressées à l'application serveur hébergée par la plateforme informatique **13.** Les requêtes interceptées peuvent être des requêtes en mode GET ou des requêtes en mode POST, indépendamment du protocole de communication utilisé (http, https, WAP, ou ftp par exemple).

Le sondeur **12** d'actes métier est, en effet, configuré pour tracer (ou suivre) l'ensemble ou un sous-ensemble des requêtes interceptées. Lors d'une phase de configuration, le sondeur **12** d'actes métier peut être configuré pour suivre uniquement les requêtes soumises à la plateforme informatique **13** par des terminaux utilisateur **10** prédéfinis.

Suite à l'interception (étape **20** de la figure 2) d'une requête adressée à la plateforme informatique **13,** le sondeur **12** d'actes métier procède à un filtrage utilisateur (étape **21** de la figure 2). Ce filtrage utilisateur **21** vise à suivre les requêtes provenant d'utilisateurs préalablement définis dans un fichier de configuration. Des utilisateurs à suivre peuvent être prédéfinis en les identifiants, par exemples, par leurs adresses IPs, adresses MACs, technologies d'accès, protocoles d'accès et/ou localisations.

Dans un autre mode de réalisation, uniquement les requêtes provenant d'une population cible (un ensemble type d'utilisateurs) sont suivies afin de se focaliser sur son utilisation métier de l'application serveur. En variante ou en combinaison, les requêtes soumises par cette population cible d'utilisateurs à la plateforme informatique **13** sont suivies uniquement pendant un intervalle de temps prédéfini.

Si toutes les requêtes interceptées sont à tracer sans aucune restriction, alors aucun filtrage utilisateur (étape **21** de la figure 2) n'est effectué.

Le sondeur **12** d'actes métier marque (étape **22** de la figure 2) (c'est-à-dire, étiquète ou « tag » en terminologie anglo-saxonne) les requêtes provenant des utilisateurs à suivre. Cette étape de marquage **22** vise à pouvoir identifier cette requête, ou au moins la session utilisateur comprenant cette requête, d'une manière unique.

Dans un mode de réalisation, pour marquer une requête à suivre adressée à la plateforme informatique **13,** le sondeur **12** d'actes métier modifie l'entête de cette requête de sorte à pouvoir la tracer et l'identifier d'une manière unique (ou, au moins tracer et identifier la session comprenant cette requête). Par exemple, le sondeur **12** d'actes métier marque l'entête des requêtes à suivre à l'aide d'un identifiant associé au terminal utilisateur source de cette requête, et/ou déduit de(s) paramètre(s) propres à chaque requête (timestamp, taille, contenu, par exemple), et/ou généré d'une manière aléatoire ou pseudo-aléatoire, et/ou à l'aide d'un indice qui s'incrémente automatiquement à chaque nouvelle requête à suivre.

Dans un mode de réalisation, l'identifiant est, avantageusement, choisi de sorte à pourvoir tracer/suivre les requêtes (et par conséquent des actes métier) d'une manière anonyme (tel qu'un identifiant généré d'une manière aléatoire, seul ou en combinaison avec d'autres paramètres tel que l'adresse IP du terminal utilisateur **10).** Un tel identifiant permet, en outre, de suivre d'une manière anonyme le comportement des utilisateurs lorsqu'ils exécutent les actes métier (fréquence d'actes métier, « thinktime »: temps d'attente entre chaque requête, les actes métier couramment exécutés par exemple).

Une étape de filtrage de requêtes (étape **23** de la figure 2) a pour objet de ne suivre parmi les requêtes marquées que celles qui sont conformes à des spécifications prédéfinies. Celles qui ne sont pas conformes aux spécifications prédéfinies sont directement transmises à la plateforme informatique **13** sans qu'elles ne soient suivies.

En effet, afin de ne cibler que les requêtes pertinentes aux actes métiers proposés par la plateforme informatique **13,** uniquement les requêtes qui correspondent à un modèle d'adresses prédéfini ou qui sont comprises dans une liste d'adresses prédéfinie, sont retenues par cette étape de filtrage de requêtes **23.**

Dans une mise en oeuvre de l'étape de filtrage de requêtes **23,** des localisateurs uniformes de ressource et/ou des modèles génériques de localisateurs uniformes de ressource (ou « URL » pour Uniform Resource Locator) prédéfinis dans un fichier de configuration sont utilisés pour tester la correspondance d'une requête marquée à ceux-ci. En d'autres termes, le sondeur **12** d'actes métier teste la correspondance (étape **23** sur la figure 2) de l'URL du service/ressource requis(e) par la requête marquée à une liste d'URLs prédéfinies à suivre.

A titre d'exemple, le sondeur **12** d'actes métier teste la correspondance de l'adresse (à savoir, l'URL) de la page Web requise à un modèle d'adresses (un modèle d'URL) ou à une liste finie d'adresses prédéfinies afin de ne suivre que les requêtes (ou URLs) vérifiant ce test de correspondance, supposées pertinentes à des actes métier spécifiques.

Il s'ensuit que, dans un mode de réalisation, les requêtes qui sont marquées mais qui ne vérifient pas le test de correspondance (donc, supposées non pertinentes à des actes métier), telles que celles portant sur des fichiers statiques (css, jpg, js par exemples) ne sont pas prises en considération (c.à.d. ne seront pas suivies).

Il est à noter que l'ordre de l'étape de filtrage utilisateur **21,** de l'étape de marquage **22** et de l'étape de filtrage de requêtes **23** de la figure 2 n'est donné qu'à titre illustratif, et n'est en aucun cas limitatif. En l'occurrence, l'étape de filtrage de requêtes **23** peut précéder l'étape de marquage **22,** ou encore l'étape de filtrage utilisateur **21.** De même, l'étape de marquage **22** peut avoir lieu avant l'étape de filtrage utilisateur. Ceci pour dire que les requêtes interceptées (étape **20** de la figure 2) sont par la suite filtrées, conformément à des données de configuration, pour ne garder que les requêtes provenant de terminaux utilisateurs **10** spécifiques (filtrage utilisateur **21)** et correspondant à des URLs prédéterminés (filtrage de requêtes 23). L'étape de marquage **22** des requêtes peut avoir lieu avant, entre ou après ces deux étapes de filtrages **21** et **23.**

Lors d'une étape d'enregistrement **24** de paramètres, que ce soit pour une requête en mode GET ou POST, des paramètres pris en compte pour le suivi des requêtes filtrées sont capturés de ces requêtes et enregistrés. Un fichier de configuration indique par type de requête (POST ou GET) les paramètres à sauvegarder. Les paramètres à enregistrer peuvent comprendre tout paramètre caractéristique d'une requête Web. L'objet de la requête (la page Web ou le service requis par exemple), le nombre et/ou la taille moyenne du contenu posté par la requête, la date et/ou l'heure (timestamps) d'une requête, et/ou la nature du terminal utilisateur **10** source de la requête (un terminal mobile ou fixe par exemple) sont des exemples non-exhaustifs des paramètres à tracer.

Plus généralement, les paramètres à enregistrer comprennent tout paramètre permettant d'en déduire l'acte métier et les caractéristiques de cet acte métier (volumétrie, durée, date, terminal utilisateur source par exemple) auquel appartient la requête soumise à la plateforme informatique **13.**

Les paramètres à suivre dans les requêtes adressées à la plateforme informatique **13** sont spécifiées lors d'une phase de configuration du sondeur **12** d'actes métier. Le choix particulier des paramètres à suivre a pour effet
- de filtrer les données à suivre ;
- de faciliter la détection des actes métier des utilisateurs dans le sens où elle permet de ne retenir que la ou les données pertinentes aux actes métier ; et
- de limiter le nombre des données à stocker.

Dans un mode de réalisation, des éventuelles données transmises de façon masquée dans les requêtes sont enregistrées.

Dans un mode de réalisation, les paramètres enregistrés portent sur des paramètres descriptifs ou caractéristiques des requêtes soumises à la plateforme informatique **13,** et donc des actes métier effectuées par l'utilisateur et non sur le contenu lui-même de ses actes métier. A titre d'exemple, dans le cas d'une requête de type POST
- pour envoyer trois photos, c'est la taille en octets des ces photos et/ou leur nombre qui est déterminée ensuite enregistré et non pas le contenu des photos, ou
- pour soumettre un formulaire électronique, c'est, par exemple, l'objet de la requête (tels que « s'authentifier» ou soumettant le couple identifiant/mot de passe, « valider », « annuler », « confirmer » en soumettant les valeurs des champs requis d'un formulaire électronique) qui est déterminé ensuite enregistré et non pas le contenu des champs du formulaire.

La détermination des paramètres temporels des actes métier peut être effectuée au moyen d'une variable alimentée avec l'heure courante ou en utilisant comme référence l'heure de la première requêtes issues du terminal utilisateur **10** lors d'une session. Les valeurs de ce paramètre permettent de calculer le temps (en millisecondes) écoulé entre deux actes métier et/ou la durée d'un acte métier (également en millisecondes).

En plus des paramètres configurés pour être tracés s'ajoute l'identifiant utilisé pour marquer les requêtes interceptées. Dans ce cas, l'identifiant marquant une requête filtrée est enregistré, par le sondeur **12** d'actes métiers, avec les paramètres enregistrés de cette requête.

Dans un autre mode de réalisation, les paramètres capturés dans une requête sont formatés dans une trace de requêtes (c'est-à-dire, un journal de requêtes ou, en anglais, un « log file » ou simplement un « log »). Plusieurs traces des requêtes peuvent être envisagées, par exemples, par terminal utilisateur **10,** par intervalle de temps, par zones géographiques des terminaux utilisateur sources des requêtes, ou par service proposé par la plateforme informatique **13.**

Pour des raisons de confidentialité, les traces enregistrées des requêtes sont, dans un mode de réalisation, cryptées selon une méthode de cryptage prédéfinie.

Les paramètres enregistrés sont stockés dans des fichiers ou dans une base de données **14** pour être ensuite analysés.

Tout comme les requêtes non prises en considération, les requêtes qui ont subi les étapes **21** à **24** sont transférées à la plateforme informatique **13.**

Avantageusement, le sondeur **13** des actes métiers peut être configuré de sorte à pouvoir
- tracer des terminaux utilisateur (ou d'une manière équivalente, des utilisateurs) spécifiques en spécifiant pour l'étape de filtrage utilisateur **21,** lors d'une phase de configuration du sondeur **12** d'actes métier, les utilisateurs à suivre;
- tracer des requêtes spécifiques en programmant en ce sens, lors d'une phase de configuration du sondeur **12** d'actes métier, l'étape de filtrage de requêtes **23** (en fournissant par exemple, un modèle d'URLs à suivre) ;
- tracer des paramètres spécifiques des requêtes à spécifier, lors d'une phase de configuration du sondeur **12** d'actes métier, pour l'étape d'enregistrement **24** de paramètres.

A cet égard, le sondeur **12** d'actes métier est configuré pour
- modifier l'entête d'une requête à l'effet de pouvoir tracer et identifier chaque session utilisateur ;
- comparer la source de la requête à une liste d'adresses IP à tracer ;
- comparer une requête cible à une liste ou un modèle de requêtes à tracer;
- enregistrer l'ensemble des paramètres caractéristiques d'une requête tels que défini dans un fichier de configuration ;
- enregistrer des éventuelles données transmises de façon masquée avec une requête telles que définies dans un fichier de configuration.

Un générateur **15** de scénarios de tests de performances d'une application serveur se charge de l'analyse des traces enregistrées dans la base de données **14.**

En se référant à la figure 3, l'analyse des traces de requêtes comprend une étape de distinction **30** (ou de recoupement) permettant de déterminer, à partir des traces de requêtes, des suites de requêtes correspondantes à des actes métier. En d'autres termes, l'étape de distinction **30** permet de distinguer, dans une trace de requêtes, des chaines de requête successives représentant des actes métier.

Plus généralement, cette étape de distinction **30** permet de rechercher, dans une trace de requêtes (c.à.d. dans un journal de requêtes ou un fichier log), une suite prédéfinie de paramètres, ces paramètres étant, respectivement, d'une suite de requêtes interceptées successivement. Cette suite de requêtes représente un acte métier supporté par l'application serveur de sorte que la distinction, dans la trace de requêtes, de la suite prédéfinie de paramètres correspond à la distinction, dans la trace de requêtes, d'un acte métier. Il s'ensuit qu'en distinguant, dans la trace de requêtes, une suite prédéfinie de paramètres revient à distinguer un acte métier dans cette trace de requêtes.

Dans une mise en oeuvre, cette étape de distinction **30** est réalisée en recherchant dans les traces enregistrées une ou plusieurs « expressions régulières » prédéfinies. Une expression régulière comprend une suite de paramètres se rapportant à une suite de requêtes, interceptées successivement, qui constituent un certain acte métier.

Cette étape de distinction **30** utilise, dans un mode de réalisation, un algorithme de calcul de similarité entre les données des traces enregistrées et les expressions régulières. On cite à titre d'exemples pour le calcul de similarité entre deux chaines, l'algorithme de Damerau-Levenshtein, les indices de similarité Cosinus, le coefficient de « Dice », ou la distance de « Jaccard ».

Avantageusement, l'étape de distinction **30** permet d'extraire des actes métier ainsi que leurs paramètres caractéristiques (volumétrie, durée par exemple) à partir d'une trace de requêtes.

A titre d'exemple, une expression régulière composée des requêtes successives ayant, respectivement, pour paramètre « objet » (ou « page demandée ») correspondants à « validation du panier » - « identification » - « adresse et mode de livraison » - « mode de paiement et paiement » est recherchée dans les traces enregistrées des requêtes. Si cette expression régulière se trouve dans les traces enregistrées, alors l'utilisateur a effectué l'acte métier « achat en ligne », cet acte étant paramétré, par exemple, par l'adresse IP et la localisation du terminal utilisateur, la durée de l'acte, et le nombre d'articles achetés.

Dans un autre exemple, l'expression régulière d'une suite du paramètre « objet de requête» (ou « page requise ») d'une suite de requêtes interceptées successivement peut être sous cette forme « chargement d'un premier contenu» - « chargement d'un deuxième contenu» - « partager » pour désigner l'acte métier de « partage de contenu ». A titre illustratif, cet acte métier peut avoir les paramètres suivant: « taille » donnée par la taille du premier et du deuxième contenu chargé, « type » indiquant le type de chacun des deux contenus chargés (photo, vidéo ou autre par exemple), « nombre » indiquant le nombre des fichiers chargés, et « date » indiquant la date de cet acte métier.

L'étape de distinction (ou recoupement) **30** peut être paramétrée pour améliorer sa pertinence. Il est, par exemple, possible d'indiquer le nombre de requêtes minimum nécessaire pour que ces requêtes puisse former un acte métier.

Un calcul statistique est appliqué, lors d'une étape de traitement **31,** sur les actes métier extraits des traces enregistrées des requêtes. Cette étape de traitement **31** a pour effet de déterminer (ou filtrer), sur la base des statistiques calculées, les actes métiers « candidats » aux scénarios de test de performances (c.à.d. ceux qui pourraient être pris en compte dans un scénario de test de performance).

Le calcul statistique permet de déterminer, par exemple, les actes métiers les plus fréquents, les actes métiers les plus fréquents par région des terminaux utilisateurs ou par service fourni par la plateforme, la durée moyenne des actes métier de même type, le volume moyen en octets des actes métiers de même type, le nombre total des actes métiers, la variation du nombre des actes métier dans le temps, la moyenne des nombres d'actes métier par utilisateur.

Une étape de génération **32** de scénarios de test de performances permet de générer, à partir des actes métiers candidats, des scénarios de test de performances. Cette étape de génération **30** permet, par ailleurs, de générer des rapports et/ou des graphes portant sur des statistiques des actes métiers et leurs paramètres caractéristiques (fréquence des actes métiers, la durée moyenne d'un acte métier, actes métier par identifiant utilisateur, volumétries d'actes métier par acte métier, actes métier dans le temps, actes métier par la localisation des utilisateurs par exemple).

L'étape de génération **32** fournit, aussi, différents paramètres des scénarios de test de performances tels que la durée totale du scénario, le volume total du scénario, les actes métiers constituants le scénario ainsi que leurs caractéristiques.

Dans un mode de réalisation, une pluralité de scénarios de test de performances sont proposés par le générateur **15** de scénarios de test de performances. De préférence, un premier scénario de test de performances intègre un nombre prédéfini des actes métier les plus fréquents. La valeur d'un paramètre d'un acte métier, compris dans ce premier scénario est, par exemple, obtenue en moyennant les valeurs de ce paramètre des actes métier extraits des traces et qui sont de même type que celui en question. A titre d'exemple, la volumétrie d'un acte métier « partage de contenu » compris dans le premier scénario est égale à la moyenne des volumétries des actes métiers « partage de contenu » extraits des traces enregistrés des requêtes.

Le générateur **15** de scénarios de test de performances permet de générer des scénarios de test de performance à partir d'un sous-ensemble des résultats obtenus suite à l'étape de traitement **31** (tels que des scénarios de test de performances par région, par plage d'identifiants utilisateur, ou par intervalle de temps).

Le générateur **15** de scénarios de test de performances est, en outre, configuré pour présenter les données collectées, valorisées sous forme de graphique et/ou de rapport ainsi qu'une maquette (ou, en anglais, story-board) représentant les actes métier candidats pour des scénarios de test de performances. Ces résultats obtenus sont mis à disposition via une interface Web ou dans une base de données.

Ainsi, le générateur **15** de scénarios de test de performance se charge de
- rechercher (étape **30),** dans les enregistrements effectués, des actes métier (repérer des suites logiques de requêtes prédéfinies) au moyen, par exemple, d'algorithmes de calcul de similarité (ou une analyse de similitude d'enchainements d'URLs) ;
- faire les calculs statistiques sur les actes métier pour déterminer ceux qui peuvent être intégrés dans un scénario de test de performances (c.à.d. déterminer les actes métier candidat);
- générer au moins un scénario de test de performances, ainsi que mettre à disposition l'ensemble des rapports et/ou graphique portant sur des actes métier.

Dans un mode de réalisation, le sondeur **12** d'actes métier est une application logicielle, ou plus généralement un produit programme d'ordinateur, comprenant des instructions pour la mise en oeuvre des procédés de sondage d'actes métier présentés ci-dessus et étant implémenté(e) au sein d'un serveur physique. Dans un mode de réalisation, ce serveur physique est le serveur frontal de la plateforme informatique **13.** Le serveur frontal comprend la couche de présentation au service applicatif fourni par la plateforme informatique **13.** Ce serveur frontal reçoit les requêtes Web depuis les terminaux utilisateur **10,** achemine ces requêtes au(x) module(s) applicatifs de la plateforme informatique **13** pour traitement, et retourne les réponses de ces modules applicatifs aux terminaux utilisateur **10.** A titre illustratifs, le serveur frontal peut être un serveur Apache et/ou un serveur SQL.

Dans un autre mode de réalisation, le générateur **15** de scénarios de test de performances est une application logicielle, ou plus généralement un produit programme d'ordinateur, comprenant des instructions pour la génération de scénarios de test de performances à partir de traces des requêtes adressées à la plateforme informatique **13.** Ce produit programme d'ordinateur peut être implémenté au sein d'un serveur physique. Ce serveur physique est, dans un mode de réalisation, le même que celui comprenant le sondeur **12** d'actes métier. En variante, le générateur **15** de scénarios de test de performances est compris dans un « back-office ».

Avantageusement, les modes de réalisation décrits ci-dessus permettent de déterminer de façon automatique des scénarios de test de performances. Il est entendu par « automatique » le fait que les actes métier constituant ces scénarios ainsi que les paramètres de ces actes métier sont capturés et traités via l'exécution, selon des données de configuration, d'instructions prédéfinies.

Il est à noter que le mécanisme adoptée par les modes de réalisation décrit ci-dessus se base sur un dispositif de type reverse-proxy. Ce mécanisme se positionne en amont de la chaîne applicative de la plateforme informatique **13** afin de tracer l'ensemble des requêtes http ou https associées à un utilisateur.

Par ailleurs, il est à noter que la référence ci-dessus à un terminal utilisateur **10** via lequel un utilisateur peut interagir avec la plateforme informatique **13** n'est donnée qu'à titre d'exemple non limitatif. Ce terminal utilisateur **10** peut, en effet, être remplacé par un serveur, une application informatique ou plus généralement une entité cliente (ou une source) via laquelle une requête peut être adressée à la plateforme informatique **13.**

Avantageusement, les méthodes et systèmes pour le traçage des actes métier, présentés ci-dessus, sont totalement transparents pour les utilisateurs, et ne requièrent aucune modification à faire sur la plateforme informatique **13.**

## Revendications

1. Procédé pour la génération d'un scénario de test de performances d'une application serveur, ce procédé comprenant les étapes suivantes
- interception **(20)** d'une requête provenant d'un terminal utilisateur **(10)** adressée à l'application serveur ;
- enregistrement **(24),** dans une trace de requêtes, d'au moins un paramètre prédéfini de la requête interceptée;
- distinction **(30),** dans la trace de requêtes, d'une suite prédéfinie de paramètres, ces paramètres étant, respectivement, d'une suite de requêtes provenant d'au moins un terminal utilisateur **(10)** interceptées successivement, la suite de requêtes représentant un acte métier supporté par l'application serveur de sorte que la distinction, dans la trace de requêtes, de la suite prédéfinie de paramètres correspond à la distinction, dans la trace de requêtes, d'un acte métier;
- génération **(32)** d'un scénario de test de performance de l'application serveur incluant l'acte métier distingué dans la trace de requêtes.

2. Le procédé de la revendication 1, comprenant en outre une étape de marquage **(22)** de la requête interceptée par un identifiant associé à la source de cette requête.

3. Le procédé de la revendication précédente, dans lequel l'identifiant par lequel est marqué la requête interceptée est enregistré avec ledit au moins un paramètre prédéfini de cette requête interceptée.

4. Le procédé de l'une quelconque des revendications précédentes, comprenant, en outre, une étape de test de correspondance de la requête interceptée à un modèle prédéfini de requêtes ou à une liste finie de requêtes prédéfinies, ledit au moins un paramètre prédéfini enregistré étant d'une requête interceptée vérifiant le test de correspondance.

5. Procédé selon l'une quelconque des revendications précédentes, comprenant, en outre, une étape de filtrage en fonction de la source de la requête interceptée, ledit au moins un paramètre prédéfini enregistré étant d'une requête intercepté provenant d'une source prédéfinie.

6. Dispositif pour la génération d'un scénario de test de performances d'une application serveur, ce dispositif comprenant
- un sondeur **(12)** d'actes métier configuré pour
o intercepter une requête provenant d'un terminal utilisateur **(10)** adressée à l'application serveur ;
o enregistrer, dans une trace de requêtes, au moins un paramètre prédéfini de la requête interceptée;
- un générateur **(15)** de scénario de test de performances configuré pour
o distinguer, dans la trace de requêtes, d'une suite prédéfinie de paramètres, ces paramètres étant, respectivement, d'une suite de requêtes provenant d'au moins un terminal utilisateur **(10)** interceptées successivement, la suite de requêtes représentant un acte métier supporté par l'application serveur de sorte que la distinction, dans la trace de requêtes, de la suite prédéfinie de paramètres correspond à la distinction, dans la trace de requêtes, d'un acte métier;
o générer un scénario de test de performances de l'application serveur incluant un acte métier distingué dans la trace de requêtes.

7. Le dispositif de la revendication précédente, dans lequel le sondeur (12) d'actes métier est, en outre, configuré pour marquer l'entête de la requête interceptée par un identifiant associé à la source de cette requête interceptée.

8. Le dispositif de la revendication 6 ou 7, dans lequel le sondeur (12) d'actes métier est, en outre, configuré pour tester la correspondance de la requête interceptée à un modèle prédéfini de requêtes ou à une liste finie de requêtes prédéfinies, ledit au moins un paramètre prédéfini enregistré étant d'une requête interceptée vérifiant le test de correspondance.

9. Le dispositif de l'une quelconque des revendications 6 à 8, dans lequel le sondeur **(12)** d'actes métier est, en outre, configuré pour filtrer en fonction de la source de la requête interceptée, ledit au moins un paramètre prédéfini enregistré étant d'une requête intercepté provenant d'une source prédéfinie.

10. Produit programme d'ordinateur implémenté sur un support mémoire, susceptible d'être mis en oeuvre au sein d'une unité de traitement informatique et comprenant des instructions pour la mise en oeuvre d'un procédé selon l'une des revendications 1 à 5.
